# EUROPEAN PATENT SPECIFICATION

(11) **EP 2 850 369 B1**
(45) Date of publication and mention of the grant of the patent: **11.07.2018**
(21) Application number: 13731174.2
(22) Date of filing: 14.05.2013
(51) Int. Cl.: F24F 1/00, F24F 9/00

(54) **REFRIGERATION METHOD FOR CONDITIONING FRESH PRODUCTS**
KÜHLVERFAHREN ZUR KONDITIONIERUNG VON FRISCHEN PRODUKTEN
PROCÉDÉ DE CONDITIONNEMENT DE PRODUITS FRAIS

(30) Priority: 15.05.2012 NL 1039603
(43) Date of publication of application: 25.03.2015
(73) Proprietor: Cool-Spot Technologics BV, 1271 LW Huizen (NL)
(72) Inventor: RUSTEMEIJER, Johan Marie, NL-1271 LW Huizen (NL)
(74) Representative: van Heuvel, Margaretha
(86) International application number: PCT/NL2013/050358
(87) International publication number: WO 2013/172709

(56) References cited:
- EP-A1- 0 645 588
- DE-A1- 10 029 543
- GB-A- 2 401 428
- US-A- 3 143 952

## Description

The invention relates to a method for refrigerating fresh products in a work environment, such as a kitchen, wherein a first air flow that is cold compared to the work environment, is supplied to the fresh products.

A refrigeration system is generally known in the field and is widely used, such as in a restaurant kitchen, or on an even larger scale, in industrial kitchens where fresh products are prepared in very large quantities. When treating fresh products, such as vegetables, meat, fish and sauces, the fresh products are placed on a supporting surface. During treatment the fresh products acquire a temperature equalling the prevailing ambient temperature that usually is higher than the temperature that is favourable for keeping the fresh products fresh for a long time. In order to prevent fresh products from becoming stale and/or spoiling prematurely due to a high kitchen temperature, an installation is disposed in or near the kitchen for conditioning air intended for the kitchen, wherein the air is cooled by a heat exchanger, such as a cooling device or an air-conditioner commonly used in the field.

A drawback of such a refrigeration system is that its capacity is defined by the size of the kitchen, as a result of which the refrigeration system is bulky, consumes a lot of energy, and wherein the people working in the kitchen, such as kitchen staff, have to do their work under cold conditions.

US3143952 discloses a method according to the preamble of appending claim 1 for maintaining different compartments defined by air adjacent curtains at different temperatures and to create turbulence so that the temperature of in said compartments is adjusted at desired.

GB2401428 discloses a patient care unit comprising outer air channels and inner air channels to define an outer air flow and an inner air flow respectively, each of them having different temperature and humidity. The outer and the inner air flows are recovered by an air extraction unit, the patient being within the inner air flow.

EP0645588 discloses a method for keeping separated the gas atmosphere, for example the indoor and outdoor atmosphere, the method using a gas curtain composed of a number of parallel gas flows which extends adjacently of each other, the gas flows being differently conditioned.

It is an object of the invention to provide a method of using a refrigeration system that is energy efficient, reduced as regards size, and that does not create an unfavourable climate for the staff treating the fresh products, whereas the fresh products can be kept in a climate that is favourable for storage and/or treatment by the staff.

The refrigeration system suitable for the method is characterised in that the refrigeration system is provided with an outlet device for transporting a first and a second air flow, wherein during use the first air flow has a first temperature and a first air humidity, and the second air flow has a second temperature and a second air humidity, wherein the first temperature is lower than the second temperature and wherein the first air humidity is lower than the second air humidity, wherein the outlet device is provided with:
(a) a first through-opening for the first air flow to flow out of the refrigeration system to a first zone extending outside of the outlet device, and a second through-opening for the second air flow to flow out of the refrigeration system to a second zone extending outside of the outlet device, wherein the outlet device is provided with a separation element situated between the first and the second opening for directing the first and the second air flow to the first and second zone, respectively, or:
(b) a first through-opening for sequentially allowing the first air flow to flow out of the refrigeration system to a first zone extending outside of the outlet device, and the second air flow to flow to a second zone extending outside of the outlet device, wherein the outlet device is provided with a separation element for directing the first and the second air flow to the first and second zone, respectively; and wherein during use the first zone extends over and at least partially adjacent to the second zone for mixing air present in the first zone with air present in the second zone, which mixing takes place in a third zone extending downstream relative to the first and the second zone.

In that way it becomes possible to pass the first air flow conditioned with cold and the second air flow conditioned with moisture, simultaneously through the first and second opening, respectively, of the outlet device, or sequentially through the first opening of the outlet device to the first and second zone, respectively, wherein air moved in the first zone is mixed downstream in the third zone with air moved in the second zone, wherein moisture containing air originating from the second zone is cooled by air originating from the first zone, which air is cooler and drier compared to the ambient air, wherein the moisture originating from the second zone evaporates, which evaporation extracts heat from the third zone and wherein the temperature in the third zone drops, wherein an adiabatic cooling arises that can be used for cooling a location for fresh products, if the refrigeration system is situated in a relatively warm environment, such as a kitchen. The refrigeration system according to the invention has the advantage and as its ultimate objective to keep the fresh products situated in the third zone refrigerated, or at least provide them with a cooler position than the environment in which the refrigeration system is operational, wherein the air present in the third zone is provided with sufficient moisture for conditioning the fresh products, wherein drying out as a result of refrigeration is substantially prevented, so that the fresh products can be kept in the third zone for a longer period of time without their quality deteriorating to an unacceptable extent.

In one embodiment, if the refrigeration system is provided with only a single first through-opening, the separation element comprises a valve operated by means of a control for directing the first air flow in a direction that is upwardly oriented with respect to the second air flow and/or for directing the second air flow in a direction that is downwardly oriented with respect to the first air flow. In that way it will be possible to guide the first air flow conditioned with cold to the first zone and, sequentially guide the second air flow conditioned with moisture to the second zone, wherein the valve is adapted for directing and/or guiding the first air flow to the first zone and/or for directing and/or guiding the second air flow to the second zone extending below the first zone.

In one embodiment the outlet device comprises a first pattern of first openings for directing and/or guiding the first air flow to the first zone, wherein the first air flow to the first zone is directed substantially transverse to the outlet device, and the outlet device comprises a second pattern of second openings for directing and/or guiding the second air flow to the second zone, wherein the second air flow to the second zone is directed substantially transverse to the outlet device. In that way it becomes possible to provide an elongated first zone with air conditioned with cold, wherein the elongated first zone extends substantially parallel to and spaced apart from the first pattern of first openings and/or extends substantially parallel to and spaced apart from the outlet device, and to provide an elongated second zone with air conditioned with moisture, wherein the elongated second zone extends substantially parallel to and spaced apart from the second pattern of second openings and/or extends substantially parallel to and spaced apart from the outlet device. The elongated refrigeration system is suitable to be placed along a supporting surface, such as a worktop, a countertop, a kitchen island and a display case.

In one embodiment an air humidifier is disposed for humidifying the second air flow, and/or wherein the air humidifier comprises an ultrasonic element for ultrasonically generating a mist, such as a water mist. In that way it becomes possible to enrich the second air flow with moisture in the form of mist, for keeping fresh products present in the third zone moist. By generating an ultrasonic vibration very small water droplets can be formed in the second air flow, as a result of which an ultrasonic mist is created, in the art known as ultrasonic water mist. The cold air prevailing in the first zone has a density exceeding the air prevailing in the second zone that is provided with the ultrasonic mist, as a result of which the water droplets of the ultrasonic mist after arrival in the third zone are subjected to a process in which the cold dry air originating from the first zone mixes with the humid air originating from the second zone, wherein the water droplets originating from the second zone evaporate to a degree, such that in the third zone sufficient water droplets are left behind or are present for conditioning the fresh products, wherein in the air prevailing in the third zone is cool and humid.

In one embodiment a cooler is disposed for cooling the first air flow. In that way it becomes possible to generate cold dry air in the first zone for by a descending further displacement mixing it in the third zone with air originating from the second zone in which warmer and more humid air prevails.

In one embodiment a first ventilating fan is adapted for with respect to the outlet device generating the first air flow having a first flow rate in a range of 150 to 250 m³ per hour if a length of the outlet device is in a range of 1.5 to 2.5 m. In that way a cooling process becomes possible in which the cold and dry air present in the first zone extends over the second zone like a cold blanket and during mixing in the third zone provides humid cool air for conditioning the fresh products.

In one embodiment a second ventilating fan is adapted for with respect to the outlet device generating the second airflow having a second flow rate in a range of 1 to 1.5 m³ per hour if a length of the outlet device is in a range of 1.5 to 2.5 m. In that way a cooling process becomes possible in which the humid air present in the second zone and comprising a mist, behaves quiet, calm a quasi-static, wherein in the third zone the colder air originating from the first zone is able to descend through the warmer air originating from the second zone wherein the adiabatic cooling arises.

In one embodiment the cooler is adapted for generating the first temperature of the first air flow that is in a range of -2 to 6°C for generating a third temperature of the air in the third zone that is in a range of 4 to 7°C, at an ambient temperature in a range of 18 to 35°C. In that way an optimal cooling process becomes possible, wherein the dry cold air present in the first zone descends through the air originating from the second zone, wherein in the third zone a first quantity of mist evaporates, as a result of which the temperature prevailing in the third zone drops to a temperature that is favourable for keeping the fresh products refrigerated, and wherein in the third zone a second quantity of mist is left behind and/or is present for preventing the fresh products from drying out.

In one embodiment the outlet device has an inner circumferential wall forming a passage for guiding the first and the second air flow, wherein the inner circumferential wall has a first and a second inner circumferential wall part each extending in the longitudinal direction of the outlet device, wherein in the outlet device a profile can be placed that is substantially parallel to the longitudinal direction of the outlet device for individually guiding the first and the second air flow, wherein during use the profile has a first bounding surface facing the first air flow and wherein during use the profile has a second bounding surface facing the second air flow, wherein a first guiding duct is formed by the first inner circumferential wall part and the first bounding surface of the profile, and wherein a second guiding duct is formed by the second inner circumferential wall part and the second bounding surface of the profile. In that way manufacturing an outlet device becomes possible wherein, using commercially available materials, preferably steel, such as stainless steel, the first and second guiding duct can be formed such that an optimal flow of the first and second air flow can be directed to the first and second zone, respectively.

In one embodiment the profile has an open part extending in the longitudinal direction that can be placed on the second inner circumferential wall part of the outlet device, and/or that is detachably connectable to the second inner circumferential wall part. In that way it becomes possible to take the profile out of the outlet device after use, for individually cleaning the profile and the inner circumferential wall of the outlet device.

In one embodiment the refrigeration system is provided with a supporting surface for positioning fresh products, wherein the refrigeration system is placed such relative to the supporting surface that during use the third zone extends over and at least partially adjacent to the supporting surface. In that way a supporting surface becomes possible on which the fresh products can be preserved at a favourable temperature and air humidity, whereas a user of the refrigeration system, such as a chef, can work in an environment adjacent to the first and the second zone, in which a temperature and air humidity prevails that is advantageous for a chef.

According to the invention, a method as claimed in claim 1 is provided for refrigerating fresh products. In that way it becomes possible to provide a third zone in which fresh products can be prepared and/or wherein the fresh products can be positioned, for instance on a supporting surface such as a worktop, wherein the air prevailing in the third zone has favourable properties for preserving the fresh products, due to a mixing of cool air originating from the first zone with humid air originating from the second zone extending below the first zone, as a result of which the fresh products are refrigerated and are less or hardly at all exposed to drying out.

In one embodiment the conditioning of the first air flow comprises the cooling of the first air flow until the first temperature is in the range of -2 to 6°C for generating a third temperature of the air in the third zone that is in a range of 4 to 7°C, at an ambient temperature in a range of 18 to 35°C. In that way an optimal cooling process becomes possible wherein the dry cold air present in the first zone mixes with the humid air present in the second zone, wherein a first quantity of mist originating from the second zone evaporates, as a result of which the temperature prevailing in the third zone drops to a temperature that is favourable for keeping the fresh products refrigerated, and wherein in the third zone a second quantity of mist is left behind and/or is present for preventing the fresh products from drying out. An additional advantage is that the supporting surface, such as a steel worktop, on which the fresh products are to be prepared and/or on which the fresh products are to be positioned, under these conditions obtains a temperature in the range of 4 to 7°C, which temperature is highly advantageous for the processing of the fresh products.

In one embodiment the conditioning of the second air flow comprises ultrasonically generating a mist for humidifying air prevailing in the second zone, such that under the influence of cold dry air present in the first zone, a first quantity of mist evaporates in the third zone for an adiabatic cooling of air prevailing in the third zone, and that in the third zone a second quantity of mist is left behind for preventing fresh products present in the third zone from drying out. In that way it becomes possible to enrich the second air flow with moisture, such as a mist, for keeping fresh products present in the third zone moist, wherein by means of an ultrasonic vibration very small water droplets can be generated in the second air flow, such as an ultrasonic mist, in the art known as ultrasonic water mist. The cold air in the first zone has a density exceeding that of the air provided with the ultrasonic mist in the second zone, as a result of which the water droplets of the ultrasonic mist after arrival in the third zone are subjected to a process in which the cold dry air from the first zone descends through the air originating from the second zone, wherein the dry air from the first zone allows the water droplets originating from the second zone and supplied to the third zone to evaporate, wherein heat is extracted from the third zone as a result of which the temperature in the third zone drops further.

The invention will now be described in more detail on the basis of exemplary embodiments with reference to the figures, in which:
Figure 1 shows a schematic overview of a refrigeration system according to the invention, which refrigeration system is adapted for cooling air intended for under cooled conditions preparing and/or positioning fresh products in a work environment, such as a kitchen.
Figure 2 shows a view in perspective of a first embodiment of an outlet device of the refrigeration system according to figure 1, wherein the outlet device is provided with a first and second through-opening for transport of a first and second air flow, respectively, to a first and second zone, respectively, extending outside of the outlet device,
Figure 3 shows a side view of the outlet device of the refrigeration system according to figures 1 and 2, and a schematic side view of the first and second zone, and a third zone,
Figure 4 shows a cross-section of the outlet device according to any one of the preceding claims, and
Figure 5 shows a cross-section of a second embodiment of an outlet device of the refrigeration system according to figure 1, wherein the outlet device is provided with a single first through-opening, for sequential transport of the first and the second air flow to the first and second zone, respectively, extending outside of the outlet device.

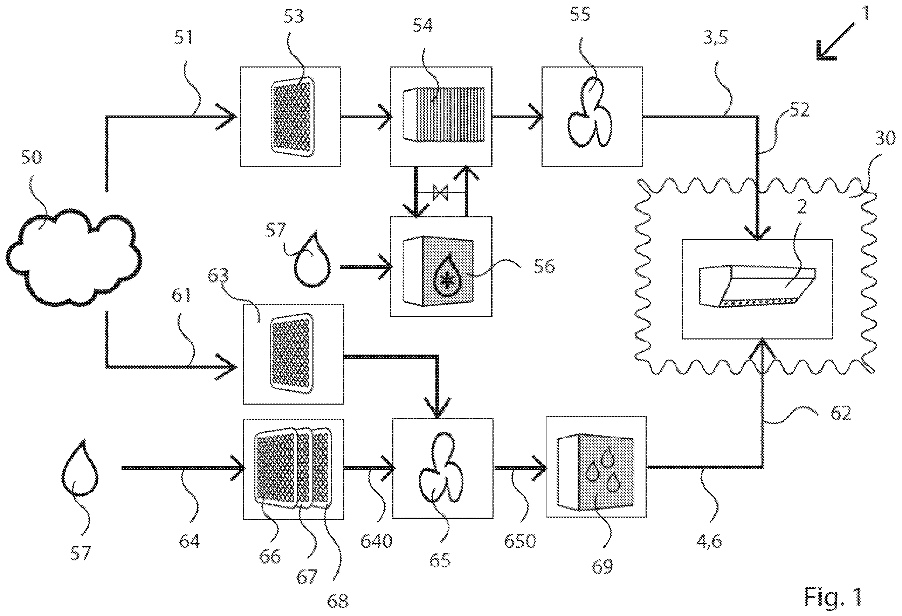

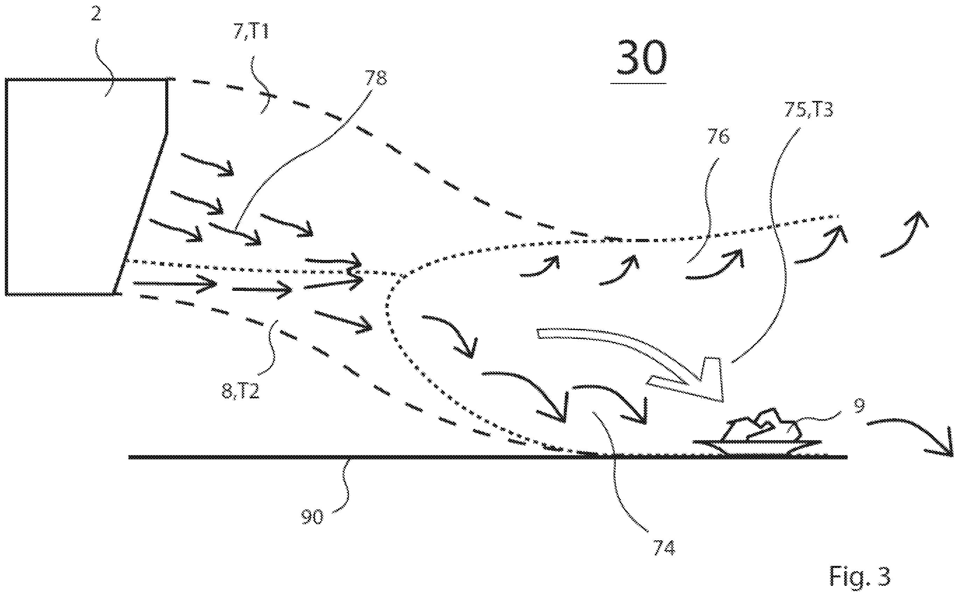

In all figures similar reference numbers refer to similar parts. Figure 1 shows an embodiment of a refrigeration system 1 according to the invention, which refrigeration system 1 is adapted for cooling air intended for under cooled conditions preparing and/or positioning fresh products 9 shown in figure 3 in an environment 30 that is for instance situated in a building, wherein the environment 30 is a work environment 30, such as a kitchen.

For refrigerating the fresh products 9 the refrigeration system 1 is provided with a first inlet 51 for transportation of air from an environment 50, such as the outside air 50, extending outside of the work environment 30. At an end 52 facing away from the first inlet 51, the refrigeration system 1 is coupled to an outlet device 2 that, during use, debouches in the work environment 30. The outlet device 2 is adapted for transportation of at least a first air flow 3 that is intended for refrigerating fresh products 9 placed in the kitchen 30.

The refrigeration system 1 can, at least partially, be placed in or near the kitchen. It is common in the field that parts of the refrigeration system 1 are placed hidden from view in the work environment 30, for instance by attaching the parts of the refrigeration system 1 above a dropped ceiling structure that is not shown.

Between the first inlet 51 and the outlet device 2 of the refrigeration system 1 a first guiding duct 5 extends, in which the first air flow 3, during use, is directed from the first inlet 51 to the outlet device 2. In this example, a first filter 53, a heat exchanger 54, and a first ventilating fan 55 are successively placed downstream in the first guiding duct 5.

The first filter 53 is adapted for mechanically filtering air that can be sucked in by means of the first ventilating fan 55. In that way it is prevented that the first air flow 3 contains solid parts such as leaves and insects.

During use of the refrigerating system 1, the temperature of the air sucked in via the inlet 51 usually is in the range of 12-35°C. The heat exchanger 54 is adapted for adjusting a temperature of the first air flow 3 such that, when leaving the outlet device 2, the first air flow 3 has a first temperature T1 that is in the range of -2 to 6°C. The heat exchanger 54 is adapted as a cooler 54 for cooling the first air flow 3.

In this example the heat exchanger 54 is coupled to a cold water machine 56, for lowering the temperature of the air sucked in to the first temperature T1. The cold water machine 56 is provided with a first circulation for transporting tap water that generally has a temperature that, during use of the refrigeration system 1, is in the range of 10-20°C. In a manner known per se the tap water is cooled down to a temperature near freezing point, which cooled down tap water is supplied to the heat exchanger 54 for cooling down the first air flow 3 and/or for lowering the temperature of the first air flow 3.

In this example the heat exchanger 54 is coupled to a device cooled by means of water 57 for cooling the first air flow 3. In an alternative embodiment that is not shown the heat exchanger 54 is coupled to an air-cooled device that is known per se for cooling the first air flow 3.

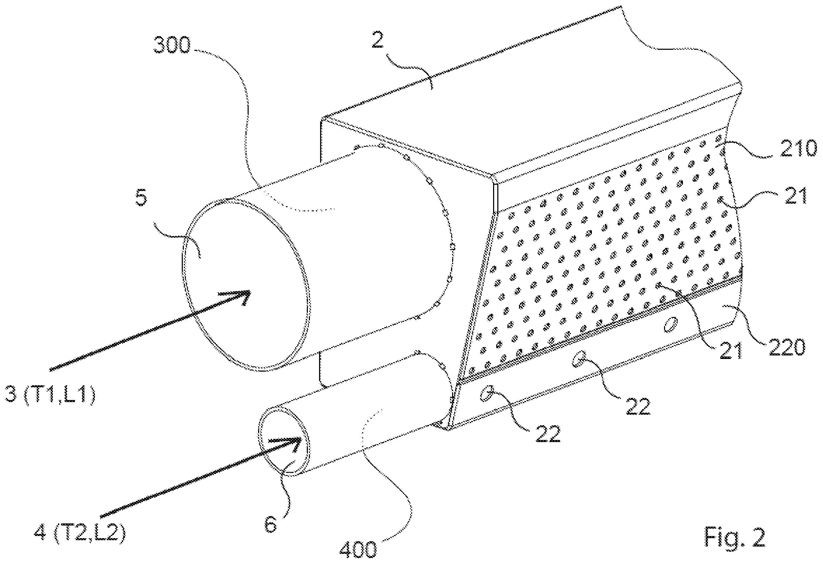

The first ventilating fan 55 is adapted for with respect to the outlet device 2 generating a first flow rate of the first air flow 3, wherein the first flow rate of the first air flow 3 is in a range of 150 to 250 m³ per hour with a length of the outlet device 2 that is in a range of 1.5 to 2.5 m. In that way a supply of the first air flow 3 takes place in a first zone 7 shown in figure 3 and extending outside of the outlet device 2, in which first zone 7 the outlet device 2 debouches via at least a first opening 21 shown in figure 2, wherein the first zone 7 can be filled with cold and dry air to be generated in the first air flow 3. The air present in the first zone 7 that is colder than the air present in the work environment 30 is advantageous for refrigerating the fresh products 9. This air that is colder per se, however, is so dry that under the influence of the presence of the relatively cold yet dry air, the fresh products 9 would dry out more rapidly.

According to the invention the refrigeration system 1 is provided with a second guiding duct 6 extending between a second inlet 61 and an end 62 facing away from the second inlet 61 which end is coupled to the outlet device 2. The second guiding duct 6 is intended for transportation of a second air flow 4 that during use is directed from the second inlet 61 to the outlet device 2, wherein a second ventilating fan 65 is adapted for generating a second flow rate of the second air flow 4. The second flow rate of the second air flow 4 relative to the outlet device 2 is in a range of 1 to 1.5 m³ per hour if a length of the outlet device 2 is in a range of 1.5 to 2.5 m. In that way a supply of the second air flow 4 takes place in a second zone 8 shown in figure 3, and extending outside of the outlet device 2, in which second zone 8 the outlet device 2 debouches via at least a second opening 22 shown in figure 2, wherein the second zone 8 can be filled with air conditioned in the second air flow 4 for conditioning the fresh products 9 placed in the kitchen 30.

The capacity of the refrigeration system 1 according to the invention is adapted to the demands made by a user on the refrigeration of fresh products 9. For instance, depending for example on an increase of the length of the outlet device 2 to ten meters, the capacity of the first and the second ventilating fan 55, 65 is ratio dependent enlarged, such that the first and the second air flow 3, 4 have an outbound flow rate that is substantially the same as the first and the second flow rate.

In this example the second inlet 61 is situated in an area, such as the outside air 50, outside of the work environment 30, wherein the second guiding duct 6 optionally comprises a second filter 63 for mechanically filtering the outside air 50. In an alternative embodiment that is not shown the second inlet 61 is situated in the work environment 30 for transporting air present in the work environment 30. In a further alternative embodiment that is not shown the second inlet 61 is coupled to a part of the first guiding duct 5 extending between the first filter 53 and the heat exchanger 54.

According to the invention, the second guiding duct 6 is provided with an air humidifier 69 between the second inlet 61 and the outlet device 2, for humidifying the second air flow 4. According to the invention the air humidifier 69 can enrich the second air flow 4 with moisture for generating a mist, such as a water mist, and after transportation via the second opening 22 of the outlet device 2, the second air flow 4, provided with the mist, debouches in the second zone 8 for at least preventing the fresh products 9 from drying out.

The mist to be generated in the second air flow 4 comprises very small water droplets that can be generated by means of an ultrasonic element 69. An ultrasonic element 69 known per se is adapted for generating a mist by means of transmitting an ultrasonic vibration released on a supply 640 of water intended for a further supply 650 to the second air flow 4, wherein very small water droplets can be formed, as a result of which the said mist is created, which mist is known in the art as an ultrasonic mist, or an ultrasonic water mist.

During use the mist to be moved by the second air flow 4 contacts the fresh products 9. It is desirable that the moisture administered to the fresh products 9 is suitable for preserving the fresh products 9. For that purpose the ultrasonic element 69 can be fed with a water supply 64, such as a water supply 64 of tap water 57, wherein between the water supply 64 and the ultrasonic element 69 a third filter 66, an osmosis filter 67 and a VOC-filter 68 are placed downstream for providing clean atomisable water that has a low amount of bacteria and is suitable for administration to the fresh products.

Figure 2 shows the outlet device 2 according to the invention for transporting the first and the second air flow 3, 4. During use the first air flow 3 has a first temperature T1 and a first air humidity L1, and the second air flow 4 has a second air temperature T2 and a second air humidity L2. The first temperature T1 is lower than the second temperature T2, and the first air humidity L1 is lower than the second air humidity L2.

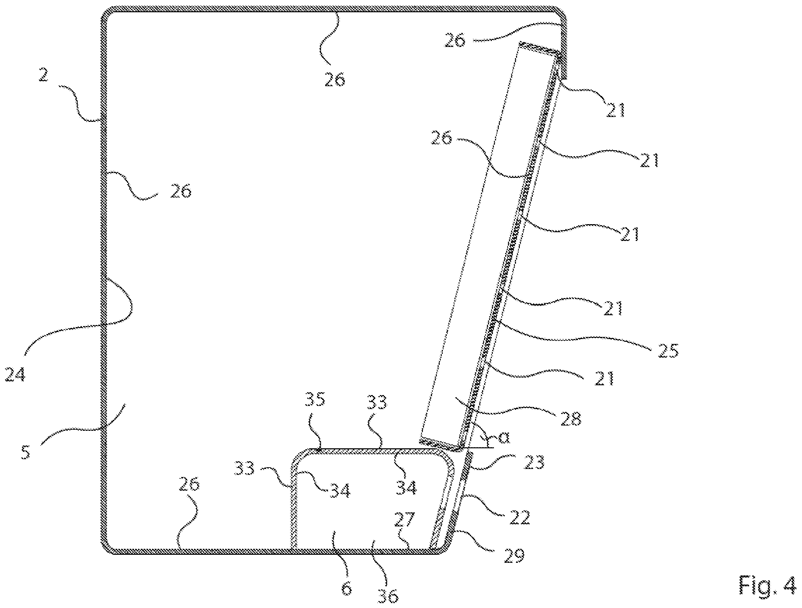

According to a first embodiment the outlet device 2 shown in figure 2 is provided with at least a first through-opening 21 for the first air flow 3 to flow out of the refrigeration system 1 to a first zone 7 extending outside of the outlet device 2, and at least a second through-opening 22 for the second air flow 4 to flow out of the refrigeration system 1 to a second zone 8 extending outside of the outlet device 2. The outlet device 2 is provided with a separation element 23, shown in detail in figure 4, and situated between the first and the second opening 21, 22 for directing and/or allowing the first and the second air flow 3, 4 to flow spaced apart to the first and second zone 7, 8, respectively. As shown in figure 3, during use, the first zone 7 extends over and at least partially adjacent to the second zone 8 for mixing air present in the first zone 7 with air present in the second zone 8, which mixing takes place in a third zone 75 extending downstream relative to the first and the second zone 7,8. Naturally during use a mixing of dry air prevailing in the first zone 7 with hotter humid air prevailing in the second zone 8 already takes place to a moderate degree in a transitional area of the first and second zone 7, 8 in a part of the first air flow 3 indicated with arrow 78, wherein a moderate degree of the cold, dry air prevailing in the first zone 7 descends through the hotter humid air prevailing in the second zone 8.

The outlet device 2 according to the invention provides a refrigeration system 1 for supplying the first air flow 3 conditioned with cold and the second airflow 4 conditioned with moisture, preferably simultaneously, through the first and second opening 21, 22, respectively, of the outlet device 2 to the first and second zone 7, 8 respectively. The moisture containing air originating from the second zone 8 is cooled down in the third zone 75 by the cold and dry air originating from the first zone 7, wherein the mist originating from the second zone 8 at least partially evaporates, at which evaporation heat is extracted from the third zone 75, and wherein the temperature in the third zone 75 drops, wherein an adiabatic cooling arises that can be used for cooling a location for the fresh products 9, if the outlet device 2 is situated in a relatively warm environment 30, such as a kitchen.

The refrigeration system 1 according to the invention has the advantage and as its ultimate objective to keep the fresh products 9 situated in the third zone 75 refrigerated, or at least provide them with a cooler position than the environment 30 in which the refrigeration system 1 is operational, wherein the air present in the third zone 75 is provided with sufficient moisture to prevent the fresh products 9 from drying out, so that the fresh products 9 can be kept in the third zone 75 for a longer period of time without the quality of the fresh products 9 deteriorating to an unacceptable extent.

The refrigeration system 1 is particularly effective when placed in a work environment 30 in which for instance an air flow, such as a draught, that is perceptible to the persons present in the work environment, is substantially absent. An optimal preservation of the fresh products 9 can be achieved by means of the refrigeration system 1 if the cooler 54 is adapted for generating the first temperature T1 of the first air flow 3 that is in a range of -2 to 6°C for generating a third temperature T3 of the air in the third zone 75 that is in a range of 4 to 7°C, at an ambient temperature that is in a range of 18 to 35°C. During such an adjustment an optimal cooling process arises, wherein the dry cold air originating from the first zone 7, in the third zone 75 mixes with the warmer humid air originating from the second zone 8, wherein in the third zone 75 a first quantity of mist evaporates, as a result of which the third temperature T3 prevailing in the third zone 75 drops to a temperature that is advantageous for preserving, such as refrigerating, the fresh products 9, and wherein in the third zone 75 a second quantity of mist is left behind that is advantageous for preventing the fresh products 9 from drying out.

During use a third air flow 76 forms in the third zone 75 which air flow faces away from the supporting surface 90. The third air flow 76 is created through evaporation of the first quantity of mist wherein heat is extracted from the third zone 75, wherein air in which extracted heat is absorbed, is heated and rises. The third air flow 76 rising has the additional advantage of bacteria originating from staff treating the fresh products being taken away from the fresh products 9, thus achieving a hygienic effect.

Simultaneously a fourth air flow 74 is formed in the third zone 75, which air flow faces the supporting surface 90. The fourth air flow 74 is created through evaporation of the first quantity of mist wherein heat is extracted from the third zone 75, wherein air from which heat is extracted is cooled down and descends in order to refrigerate the fresh products 9.

In the example shown in figure 2 the outlet device 2 is provided with a first pattern 210 of first openings 21 for directing and/or guiding the first air flow 3 to the first zone 7, wherein the first air flow 3 to the first zone 7 is directed substantially transverse to the outlet device 2, and in this example directed transverse to the longitudinal direction of the outlet device 2. In that way an elongated first zone 7 is formed, wherein the elongated first zone 7 extends substantially parallel to and spaced apart from the first pattern 210 of first openings 21 and/or extends substantially parallel to and spaced apart from the outlet device 2.

In the example shown in figure 2 the outlet device 2 is provided with a second pattern 220 of second openings 22 for directing and/or guiding the second air flow 4 to the second zone 8, wherein the second air flow 4 to the second zone 8 is directed substantially transverse to the outlet device 2, and in this example directed transverse to the longitudinal direction of the outlet device 2. In that way an elongated second zone 8 is formed, wherein the elongated second zone 8 extends substantially parallel to and spaced apart from the second pattern 220 of second openings 22 and/or extends substantially parallel to and spaced apart from the outlet device 2.

Figure 3 shows the outlet device 2 of the refrigeration system 1 that is provided with a supporting surface 90 for positioning the fresh products 9. The refrigeration system 1 is adapted such relative to the supporting surface 90 that during use, the third zone 75 extends over and at least partially adjacent to the supporting surface 90. The location 90 is adapted for preparing and/or positioning the fresh products 9 under conditions that are favourable for the fresh products 9, such as an advantageous temperature that is in the range of 4 to 7°C, and an air humidity that, during and/or after an adiabatic cooling process, is sufficiently high to prevent the fresh products 9 from drying out.

The refrigeration system 1 according to the invention provides a local refrigeration of the fresh products 9 positioned on the surface 90, whereas a temperature and air humidity in the environment 30 adjacent to the first and second zone 7, 8 is defined by other conditions, for instance by an installation for climate control, such as equipment for heating or cooling the ambient air 30. Locally refrigerating the fresh products 9 by means of the refrigeration system 1 is energy efficient as only a small part of the work environment 30 needs to be cooled. Locally refrigerating the fresh products 9 has the further advantage that a user of the refrigeration system 1, such as a chef, working in an environment 30 adjacent to the first and second zone 7, 8, is able to work in a temperature and a prevailing air humidity that is advantageous for the chef.

Figure 4 shows a cross-section of the outlet device 2, wherein the first guiding duct 5 ends near a first outlet part 28 extending transverse to the plane of the drawing in the longitudinal direction of the outlet device 2. The first outlet part 28 forms a grid 25 in which the series of first through-openings 21 is disposed. The series of first openings 21 provides a supply of the first air flow 3 generated by the first ventilating fan 55, which air flow after being discharged into the first zone 7 extends over the air in the second zone 8 like a cold blanket. In this example, the grid 25 can be detached from the outlet device 2 for individual cleaning of the grid 25, for instance in a sink that is not shown, in the kitchen 30.

Figure 4 shows that the second guiding duct 6 ends near a second outlet part 29 extending substantially parallel to the longitudinal direction of the outlet device 2. In the second outlet part 29 the series of second through-openings 22 is disposed. The series or row of second openings 22 provides a supply of the second air flow 4 generated by means of the second ventilating fan 65, which air flow after being discharged in the second zone 8 has a characteristic that is suitable for moving the mist present in the second airflow 4, wherein relative to the outlet device 2, the second flow rate of the second air flow 4 is substantially lower than the first flow rate of the first air flow 3.

During use the first and the second outlet part 28, 29 form a sidewall of the outlet device 2, which sidewall 28, 29 extends at an angle α to the supporting surface 90 shown in figure 3.

In this example the outlet device 2 has an inner circumferential wall 24 forming a passage 5, 6 for guiding the first and the second air flow 3, 4. The inner circumferential wall 24 has a first and a second inner circumferential wall part 26, 27 each extending in the longitudinal direction of the outlet device 2. In the outlet device 2 a profile 35 can be placed substantially parallel to the longitudinal direction of the outlet device 2 for individually guiding the first and the second air flow 3, 4. During use the profile 35 has a first bounding surface 33 facing the first air flow 3, and during use has a second bounding surface 34 facing the second air flow 4. The first guiding duct 5 is formed by the first inner circumferential wall part 26 and the first bounding surface 33 of the profile 35 facing the first air flow 3. The second guiding duct 6 is formed by the second inner circumferential wall part 27 and the second bounding surface 34 of the profile 35 facing the second air flow 4.

According to figure 4 the profile 35 has an open part 36 extending in the longitudinal direction of the outlet device 2 and that can be placed on the second inner circumferential wall part 27 of the outlet device 2. In this example the open part 36 of the profile 35 can be detachably connected to the second inner circumferential wall part 27 for after use of the refrigeration system 1 taking it out of the outlet device 2 for instance for individually cleaning the outlet device 2 and the profile 35, after for instance the first end 52 of the first guiding duct 5 and the second end 62 of the second guiding duct 6 have been uncoupled from the outlet device 2.

After taking the grid 25 and the profile 35 out of the outlet device 2, both the profile 35 and the outlet device 2 are easily accessible for cleaning. The profile 35 provided with the open part 36 is easily accessible from the open part 36, as opposed to how to for instance a closed profile that is not shown, would be. The outlet device 2 has a substantially larger size than the profile 35, wherein by taking out the grid 25, the inner circumferential wall 24 is easily accessible for cleaning using a cleaning agent or rinsing agent.

The opening 400 present in the outlet device 2 for the second air flow 4 to enter can be used for discharging the rinsing agent and/or for discharging dirt. The outlet device 2 is placed such during use that a part of the first and the second inner circumferential wall 26, 27 situated lowest extending along outlet device 2 is placed at a fall, such that the rinsing agent is able to flow away via the opening 400 present in the outlet device 2. Near the opening 400 the end 62 facing away from the second inlet 61 is provided with a drain that is not shown and oriented downward for a discharge of the rinsing agent to a sewer, wherein in the end 62 of the second guiding duct 6 that faces away from the second inlet 61, a separation element is placed that in a first position is adapted for preventing the rinsing agent from flowing back to the ultrasonic element 69 and that in a second position is adapted for preventing the second airflow 4 comprising the ultrasonic mist from flowing to the sewer.

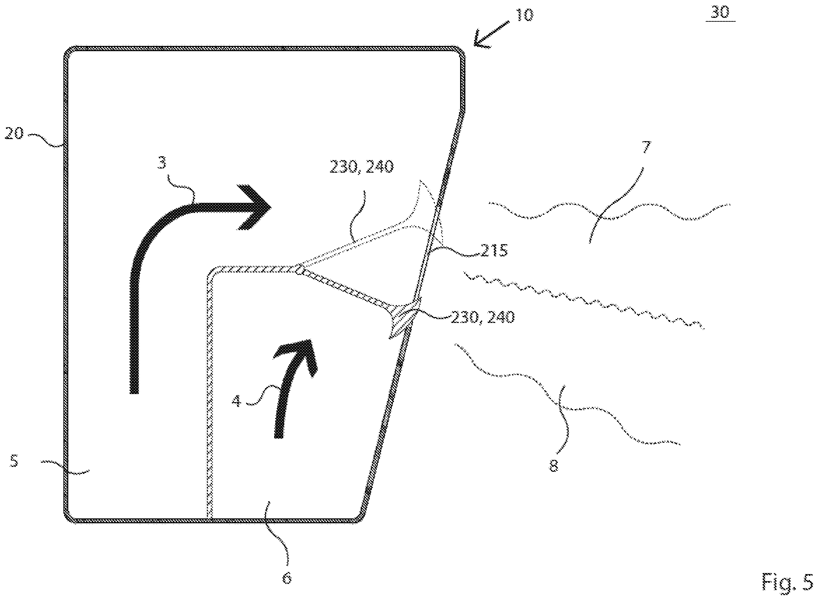

According to a second embodiment of the invention the outlet device 20 of a refrigeration system 10 shown in figure 5 is provided with a single first through-opening 215 for sequentially allowing the first air flow 3 to flow from the refrigeration system 10 to a first zone 7 extending outside of the outlet device 20, and a second air flow 4 to a second zone 8 extending outside of the outlet device 20. The outlet device 20 is provided with a separation element 230 for directing the first and the second air flow 3, 4 to the first and second zone 7, 8, respectively. The first air flow 3 conditioned with cold and the second air flow 4 conditioned with moisture can successively be passed through the first opening 215 of the outlet device 20 to the first and the second zone 7, 8, respectively. During use the first zone 7 extends over and at least partially adjacent to the second zone 8 for mixing air present in the first zone 7 with air present in the second zone 8, which mixing takes place in a third zone 75 extending downstream relative to the first and the second zone 7, 8. In the third zone 75 the moisture containing air or mist originating from the second zone 8 is cooled down by cold and dry air originating from the first zone 7, wherein the mist arriving in the third zone 75 partially evaporates, at which evaporation heat is extracted from the third zone 75 and wherein the temperature in the third zone 75 drops, wherein an adiabatic cooling arises that can be used for refrigerating the fresh products 9, if the refrigeration system 10 is situated in a relatively warm environment 30, such as a kitchen.

The separation element 230 of the outlet device 20 is provided with a valve 240 operated by a control known per se that is not shown, for directing the first air flow 3 in a direction that is upwardly oriented with respect to the second air flow 4 and/or for directing the second air flow 4 in a direction that is downwardly oriented with respect to the first air flow 3. By means of the valve 240 the first air flow 3 conditioned with cold can be guided to the first zone 7, and sequentially, the second air flow 4 conditioned with moisture can be guided to the second zone 8. The valve 240 is adapted for directing and/or guiding the first air flow 3 to the first zone 7 and/or for directing and/or guiding the second air flow 4 to the second zone 8 extending below the first zone 7.

A use of the refrigeration system 1, 10 according to the invention provides the refrigeration of fresh products 9 that are situated on the supporting surface 90. The fresh products 9 situated in the third zone 75 can be or be kept refrigerated by means of the refrigeration system 1, 10 wherein the air present in the third zone 75 is provided with sufficient moisture for conditioning the fresh products 9, wherein the fresh products 9 drying out as a result of only supplying the first air flow 3 refrigeration is substantially prevented, so that the fresh products 9 can be kept in the third zone 75 for a longer period of time without the quality of the fresh products deteriorating to an unacceptable extent.

The refrigeration system 1, 10 according to the invention can be used in cases where fresh products such as cut and sliced fruit and vegetables are positioned in a display case or display cabinet, wherein the fresh products can be placed in a third zone 75 extending adjacent to the outlet device 2, in which third zone 75, during use, mixing takes place of a cold, dry first air flow 3 originating from the outlet device 2 with a warmer, water mist-containing second airflow 4 originating from the outlet device 2, wherein the first air flow 3 debouches over the second airflow 4 in a first and a second zone 7, 8 respectively, which during use extend between the outlet device 2 and the third zone 75, wherein an adiabatic cooling arises in the third zone 75.

Naturally the invention is not limited to the preferred embodiment described and shown, but it extends to any embodiment falling within the scope of protection as defined in the claims. For instance the longitudinal dimension of the outlet device 2 of the refrigeration system 1, 10 is not limited to a longitudinal dimension in the range of 1.5 to 2.5 m, but a refrigeration system can be used having a longitudinal dimension that is beyond that range, and wherein the first flow rate and the second flow rate of the first and the second air flow 3, 4, respectively, are adapted accordingly.

## Claims

1. A method for refrigerating fresh products (9), wherein a refrigeration system (1) provided with an outlet device (2) for transporting a first and a second airflow (3, 4) is used, the outlet device (2) being provided with:
(a) a first through-opening (21) for the first air flow (3) to flow out of the refrigeration system (1) to a first zone (7) extending outside of the outlet device (2), and a second through-opening (22) for the second air flow (4) to flow out of the refrigeration system (1) to a second zone (8) extending outside of the outlet device (2), wherein the outlet device (2) is provided with a separation element (23) situated between the first and the second opening (21, 22) for directing the first and the second air flow (3, 4) to the first and second zone (7, 8), respectively, or:
(b) a first through-opening (21) for sequentially allowing the first air flow (3) to flow out of the refrigeration system (1) to a first zone (7) extending outside of the outlet device (2), and the second air flow (4) to flow to a second zone (8) extending outside of the outlet device (2), wherein the outlet device (2) is provided with a separation element (230) for directing the first and the second air flow (3, 4) to the first and second zone (7, 8), respectively; **characterized in that** the method comprises the steps of:
- generating the first and the second air flow (3, 4), wherein the first air flow (3) has a first temperature (T1) and a first air humidity (L1), and the second airflow (4) has a second temperature (T2) and a second air humidity (L2),
- conditioning the first and the second air flow (3, 4), such that the first temperature (T1) is lower than the second temperature (T2) and that the first air humidity (L1) is lower than the second air humidity (L2),
- allowing the first air flow (3) to flow out of the outlet device (2) to the first zone (7) extending outside of the outlet device (2), and allowing the second air flow (4) to flow out of the outlet device (2) to the second zone (8) extending outside of the outlet device (2), such that the first zone (7) extends over and at least partially adjacent to the second zone (8) for mixing air present in the first zone (7) with the air present in the second zone (8), which mixing takes place in a third zone (75) extending downstream relative to the first and the second zone (7, 8), the products being refrigerated in the third zone.

2. The method according to claim 1, wherein the separation element (230) comprises a valve (240) operated by means of a control for directing the first air flow (3) and/or for directing the second air flow (4)) and the method comprises the step of directing the first air flow (3) in a direction that is upwardly oriented with respect to the second airflow (4) and/or directing the second airflow (4) in a direction that is downwardly oriented with respect to the first air flow (3) by means of the valve (240).

3. The method according to claim 1 or 2, wherein the outlet device (2) comprises a first pattern (210) of first openings (21) for directing and/or guiding the first air flow (3) to the first zone (7), and a second pattern (220) of second openings (22) for directing and/or guiding the second air flow (4) to the second zone (8) and wherein the first air flow (3) is directed to the first zone (7) substantially transverse to the outlet device (2), and the second airflow (4) is directed to the second zone (8) substantially transverse to the outlet device (2).

4. The method according to any of the previous claims, wherein the refrigeration system (1) comprises a cooler (54) for cooling the first air flow (3) and the conditioning the first air flow (3) comprises the cooling of the first air flow (3) by the cooler (54) until the first temperature (T1) is in a range of -2 to 6°C for generating a third temperature (T3) of the air in the third zone (75) that is in a range of 4 to 7°C, at an ambient temperature in a range of 18 to 35°C.

5. The method according to any of the previous claims, wherein the refrigeration system (1) is provided with an air humidifier (69) for humidifying the second air flow (4), and/or wherein the air humidifier (69) comprises an ultrasonic element (69) for ultrasonically generating a mist and the conditioning of the second airflow (4) comprises ultrasonically generating a mist for humidifying air prevailing in the second zone (8), such that under the influence of cold dry air present in the first zone (7), a first quantity of mist evaporates in the third zone (75) for an adiabatic cooling down of air prevailing in the third zone (75), and that in the third zone (75) a second quantity of mist is left behind for preventing fresh products present in the third zone (75) from drying out.

6. The method according to any of the previous claims, wherein the refrigeration system (1) comprises a first ventilating fan (55) adapted with respect to the outlet device (2) and the first airflow (3) having a first flow rate in a range of 150 to 250 m3 per hour if a length of the outlet device (2) is in a range of 1.5 to 2.5 m is generated by the ventilating fan (55).

7. The method according to any of the previous claims, wherein the refrigeration system (1) comprises a second ventilating fan (65) adapted with respect to the outlet device (2) and the second air flow (4) having a second flow rate in a range of 1 to 1.5 m³ per hour if a length of the outlet device (2) is in a range of 1.5 to 2.5 m is generated by the second ventilating fan (56).

8. The method according to any one of the preceding claims, wherein the refrigeration system (1) is provided with a supporting surface (90) for positioning fresh products (9), and wherein the refrigeration system (1) is placed such relative to the supporting surface (90) that the third zone (75) extends over and at least partially adjacent to the supporting surface (90).

## Patentansprüche

1. Verfahren zum Kühlen von frischen Produkten (9), wobei ein Kühlsystem (1), das eine Auslassvorrichtung (2) für den Transport eines ersten und eines zweiten Luftstroms (3, 4) aufweist, verwendet wird, wobei die Auslassvorrichtung (2) das Folgende aufweist:
(a) eine erste Durchgangsöffnung (21) für den ersten Luftstrom (3), damit dieser aus dem Kühlsystem (1) zu einer ersten Zone (7) fließt, die sich außerhalb der Auslassvorrichtung (2) erstreckt, und eine zweite Durchgangsöffnung (22) für den zweiten Luftstrom (4), damit dieser aus dem Kühlsystem (1) zu einer zweiten Zone (8) fließt, die sich außerhalb der Auslassvorrichtung (2) erstreckt, wobei die Auslassvorrichtung (2) ein Trennelement (23) aufweist, das zum Leiten des ersten und des zweiten Luftstroms (3, 4) zur ersten bzw. zweiten Zone (7, 8) zwischen der ersten und der zweiten Öffnung (21, 22) angeordnet ist, oder:
(b) eine erste Durchgangsöffnung (21), die es sequentiell gestattet, dass der erste Luftstrom (3) aus dem Kühlsystem (1) zu einer ersten Zone (7) fließt, die sich außerhalb der Auslassvorrichtung (2) erstreckt, und dass der zweite Luftstrom (4) zu einer zweiten Zone (8) fließt, die sich außerhalb der Auslassvorrichtung (2) erstreckt, wobei die Auslassvorrichtung (2) ein Trennelement (230) zum Leiten des ersten und des zweiten Luftstroms (3, 4) zur ersten bzw. zweiten Zone (7, 8) aufweist;
**dadurch gekennzeichnet, dass** das Verfahren die folgenden Schritte umfasst:
- Erzeugen des ersten und des zweiten Luftstroms (3, 4), wobei der erste Luftstrom (3) eine erste Temperatur (T1) und eine erste Luftfeuchtigkeit (L1) aufweist und der zweite Luftstrom (4) eine zweite Temperatur (T2) und eine zweite Luftfeuchtigkeit (L2) aufweist,
- Konditionieren des ersten und des zweiten Luftstroms (3, 4), so dass die erste Temperatur (T1) niedriger als die zweite Temperatur (T2) ist und dass die erste Luftfeuchtigkeit (L1) geringer als die zweite Luftfeuchtigkeit (L2) ist,
- Herausfließen lassen des ersten Luftstroms (3) aus der Auslassvorrichtung (2) zur ersten Zone (7), die sich außerhalb der Auslassvorrichtung (2) erstreckt, und herausfließen lassen des zweiten Luftstroms (4) aus der Auslassvorrichtung (2) zur zweiten Zone (8), die sich außerhalb der Auslassvorrichtung (2) erstreckt, so dass sich die erste Zone (7) über und zumindest teilweise neben der zweiten Zone (8) erstreckt, um in der ersten Zone (7) anwesende Luft mit der in der zweiten Zone (8) anwesenden Luft zu mischen, wobei das Mischen in einer dritten Zone (75) stattfindet, die sich stromabwärts bezüglich der ersten und der zweiten Zone (7, 8) erstreckt, wobei die Produkte in der dritten Zone gekühlt werden.

2. Verfahren nach Anspruch 1, wobei das Trennelement (230) ein Ventil (240) umfasst, das über eine Steuerung betätigt wird, um den ersten Luftstrom (3) zu leiten und/oder um den zweiten Luftstrom (4) zu leiten, und wobei das Verfahren den Schritt des Leitens des ersten Luftstroms (3) in eine Richtung, die bezüglich des zweiten Luftstroms (4) nach oben orientiert ist, und/oder des Leitens des zweiten Luftstroms (4) in eine Richtung, die bezüglich des ersten Luftstroms (3) nach unten orientiert ist, mittels des Ventils (240) umfasst.

3. Verfahren nach Anspruch 1 oder 2, wobei die Auslassvorrichtung (2) ein erstes Muster (210) von ersten Öffnungen (21) zum Leiten und/oder Führen des ersten Luftstroms (3) zur ersten Zone (7) und ein zweites Muster (220) von zweiten Öffnungen (22) zum Leiten und/oder Führen des zweiten Luftstroms (4) zur zweiten Zone (8) umfasst und wobei der erste Luftstrom (3) zu ersten Zone (7) im Wesentlichen quer zur Auslassvorrichtung (2) geleitet wird und der zweite Luftstrom (4) zur zweiten Zone (8) im Wesentlichen quer zur Auslassvorrichtung (2) geleitet wird.

4. Verfahren nach einem der vorhergehenden Ansprüche, wobei das Kühlsystem (1) einen Kühler (54) zum Kühlen des ersten Luftstroms (3) umfasst und die Konditionierung des ersten Luftstroms (3) das Kühlen des ersten Luftstroms (3) durch den Kühler (54) umfasst, bis sich die erste Temperatur (T1) in einem Bereich von -2 bis 6°C befindet, um eine dritte Temperatur (T3) des Luft in der dritten Zone (75) zu erzeugen, die in einem Bereich von 4 bis 7°C liegt, bei einer Umgebungstemperatur in einem Bereich von 18 bis 35°C.

5. Verfahren nach einem der vorhergehenden Ansprüche, wobei das Kühlsystem (1) einen Luftbefeuchter (69) zum Befeuchten des zweiten Luftstroms (4) aufweist und/oder wobei der Luftbefeuchter (69) ein Ultraschallelement (69) zur Ultraschallerzeugung eines Nebels umfasst und die Konditionierung des zweiten Luftstroms (4) die Ultraschallerzeugung eines Nebels zum Befeuchten von in der zweiten Zone (8) vorhandener Luft umfasst, so dass unter dem Einfluss von kalter trockener Luft, die in der ersten Zone (7) anwesend ist, eine erste Nebelmenge in der dritten Zone (75) für ein adiabatisches Abkühlen der in der dritten Zone (75) vorhandenen Luft verdunstet, und dass in der dritten Zone (75) eine zweite Nebelmenge zurückbleibt, um Austrocknen von frischen Produkten, die in der dritten Zone (75) vorliegen, zu verhindern.

6. Verfahren nach einem der vorhergehenden Ansprüche, wobei das Kühlsystem (1) einen ersten Lüfter (55) umfasst, der bezüglich der Auslassvorrichtung (2) eingerichtet ist, und der erste Luftstrom (3), der eine erste Strömungsrate in einem Bereich von 150 bis 250 m³ pro Stunde aufweist, wenn sich eine Länge der Auslassvorrichtung (2) in einem Bereich von 1,5 bis 2,5 m befindet, vom Lüfter (55) erzeugt wird.

7. Verfahren nach einem der vorhergehenden Ansprüche, wobei das Kühlsystem (1) einen zweiten Lüfter (65) umfasst, der bezüglich der Auslassvorrichtung (2) eingerichtet ist, und der zweite Luftstrom (4), der eine zweite Strömungsrate in einem Bereich von 1 bis 1,5 m³ pro Stunde aufweist, wenn sich eine Länge der Auslassvorrichtung (2) in einem Bereich von 1,5 bis 2,5 m befindet, vom zweiten Lüfter (56) erzeugt wird.

8. Verfahren nach einem der vorhergehenden Ansprüche, wobei das Kühlsystem (1) eine Stützfläche (90) zur Platzierung von frischen Produkten (9) aufweist, und wobei das Kühlsystem (1) bezüglich der Stützfläche (90) so angeordnet wird, dass sich die dritte Zone (75) über und mindestens teilweise neben der Stützfläche (90) erstreckt.

## Revendications

1. Procédé pour réfrigérer des produits frais (9), dans lequel un système de réfrigération (1) pourvu d'un dispositif de sortie (2) pour transporter des premier et second écoulements d'air (3, 4) est utilisé, le dispositif de sortie (2) étant pourvu de :
(a) une première ouverture débouchante (21) pour que le premier écoulement d'air (3) s'écoule en sortie du système de réfrigération (1) vers une première zone (7) s'étendant à l'extérieur du dispositif de sortie (2), et une seconde ouverture débouchante (22) pour que le second écoulement d'air (4) s'écoule en sortie du système de réfrigération (1) vers une deuxième zone (8) s'étendant à l'extérieur du dispositif de sortie (2), dans lequel le dispositif de sortie (2) est pourvu d'un élément de séparation (23) situé entre les première et seconde ouvertures (21, 22) pour conduire les premier et second écoulements d'air (3, 4) vers les première et deuxième zones (7, 8), respectivement, ou :
(b) une première ouverture débouchante (21) pour permettre séquentiellement au premier écoulement d'air (3) de s'écouler en sortie du système de réfrigération (1) vers une première zone (7) s'étendant à l'extérieur du dispositif de sortie (2), et au second écoulement d'air (4) de s'écouler vers une deuxième zone (8) s'étendant à l'extérieur du dispositif de sortie (2), dans lequel le dispositif de sortie (2) est pourvu d'un élément de séparation (230) pour conduire les premier et second écoulements d'air (3, 4) vers les première et deuxième zones (7, 8), respectivement ;
**caractérisé en ce que** le procédé comprend les étapes de :
- la génération des premier et second écoulements d'air (3, 4), dans lequel le premier écoulement d'air (3) possède une première température (T1) et une première humidité d'air (L1), et le second écoulement d'air (4) possède une deuxième température (T2) et une seconde humidité d'air (L2),
- le conditionnement des premier et second écoulements d'air (3, 4), de telle sorte que la première température (T1) soit inférieure à la deuxième température (T2) et que la première humidité d'air (L1) soit inférieure à la seconde humidité d'air (L2),
- la permission au premier écoulement d'air (3) de s'écouler en sortie du dispositif de sortie (2) vers la première zone (7) s'étendant à l'extérieur du dispositif de sortie (2), et la permission au second écoulement d'air (4) de s'écouler en sortie du dispositif de sortie (2) vers la deuxième zone (8) s'étendant à l'extérieur du dispositif de sortie (2), de telle sorte que la première zone (7) s'étende par-dessus et de façon au moins partiellement adjacente à la deuxième zone (8) pour mélanger de l'air présent dans la première zone (7) avec l'air présent dans la deuxième zone (8), lequel mélange a lieu dans une troisième zone (75) s'étendant en aval par rapport aux première et deuxième zones (7, 8), les produits étant réfrigérés dans la troisième zone.

2. Procédé selon la revendication 1, dans lequel l'élément de séparation (230) comprend une valve (240) actionnée au moyen d'une commande pour conduire le premier écoulement d'air (3) et/ou pour conduire le second écoulement d'air (4) et le procédé comprend l'étape de la conduite du premier écoulement d'air (3) dans une direction qui est orientée vers le haut par rapport au second écoulement d'air (4) et/ou la conduite du second écoulement d'air (4) dans une direction qui est orientée vers le bas par rapport au premier écoulement d'air (3) au moyen de la valve (240).

3. Procédé selon la revendication 1 ou 2, dans lequel le dispositif de sortie (2) comprend un premier motif (210) de premières ouvertures (21) pour conduire et/ou guider le premier écoulement d'air (3) vers la première zone (7), et un second motif (220) de secondes ouvertures (22) pour conduire et/ou guider le second écoulement d'air (4) vers la deuxième zone (8) et dans lequel le premier écoulement d'air (3) est conduit vers la première zone (7) de façon sensiblement transversale au dispositif de sortie (2), et le second écoulement d'air (4) est conduit vers la deuxième zone (8) de façon sensiblement transversale au dispositif de sortie (2).

4. Procédé selon l'une quelconque des revendications précédentes, dans lequel le système de réfrigération (1) comprend un refroidisseur (54) pour refroidir le premier écoulement d'air (3) et le conditionnement du premier écoulement d'air (3) comprend le refroidissement du premier écoulement d'air (3) par le refroidisseur (54) jusqu'à ce que la première température (T1) soit dans une plage de -2 à 6°C pour générer une troisième température (T3) de l'air dans la troisième zone (75) qui est dans une plage de 4 à 7°C, à une température ambiante dans une plage de 18 à 35°C.

5. Procédé selon l'une quelconque des revendications précédentes, dans lequel le système de réfrigération (1) est pourvu d'un humidificateur d'air (69) pour humidifier le second écoulement d'air (4), et/ou dans lequel l'humidificateur d'air (69) comprend un élément ultrasonique (69) pour générer de façon ultrasonique un brouillard et le conditionnement du second écoulement d'air (4) comprend la génération ultrasonique d'un brouillard pour humidifier de l'air régnant dans la deuxième zone (8), de telle sorte que sous l'influence d'air sec froid présent dans la première zone (7), une première quantité de brouillard s'évapore dans la troisième zone (75) pour un refroidissement adiabatique de l'air régnant dans la troisième zone (75), et que, dans la troisième zone (75), une second quantité de brouillard soit laissée pour empêcher des produits frais présents dans la troisième zone (75) de sécher.

6. Procédé selon l'une quelconque des revendications précédentes, dans lequel le système de réfrigération (1) comprend un premier ventilateur (55) adapté par rapport au dispositif de sortie (2) et le premier écoulement d'air (3), possédant un premier débit dans une plage de 150 à 250 m³ par heure si une longueur du dispositif de sortie (2) est dans une plage de 1,5 à 2,5 m, est généré par le ventilateur (55).

7. Procédé selon l'une quelconque des revendications précédentes, dans lequel le système de réfrigération (1) comprend un second ventilateur (65) adapté par rapport au dispositif de sortie (2) et le second écoulement d'air (4), possédant un second débit dans une plage de 1 à 1,5 m³ par heure si une longueur du dispositif de sortie (2) est dans une plage de 1,5 à 2,5 m, est généré par le second ventilateur (56).

8. Procédé selon l'une quelconque des revendications précédentes, dans lequel le système de réfrigération (1) est pourvu d'une surface de support (90) pour positionner des produits frais (9), et dans lequel le système de réfrigération (1) est placé, par rapport à la surface de support (90), de telle sorte que la troisième zone (75) s'étende par-dessus et de façon au moins partiellement adjacente à la surface de support (90).
